(19) Europäisches Patentamt
European Patent Office
Office européen des brevets

(11) Publication number: **0 023 766**
**A1**

(12) **EUROPEAN PATENT APPLICATION**

(21) Application number: **80302204.5**

(22) Date of filing: **01.07.80**

(51) Int. Cl.³: **C 07 D 285/12**, A 01 N 47/38
// C07C159/00

(30) Priority: **09.07.79 US 55712**

(43) Date of publication of application: **11.02.81**
**Bulletin 81/6**

(84) Designated Contracting States: **BE CH IT LI NL SE**

(71) Applicant: **Gulf Oil Corporation, P. O. Box 1166, Pittsburgh Pennsylvania 15230 (US)**

(72) Inventor: **Kirkpatrick, Joel Lee, 17 Canal Run East, Washington Crossing Pennsylvania 18977 (US)**
Inventor: **Rutter, Jerry Lynn, 6128 Norwood, Mentor Ohio 44060 (US)**

(74) Representative: **Huskisson, Frank Mackie, Fitzpatricks 48 St. Vincent Street, Glasgow G2 5TT (GB)**

(54) **Phenyliminothiadiazolines, a method for manufacturing them and their application for regulating growth of plants.**

(57) A method of regulating the growth of plants, including combating unwanted vegetation, comprises applying to the plants, either on seed, the soil or directly on the plants an effective amount of a novel compound of the class having the general structural formula

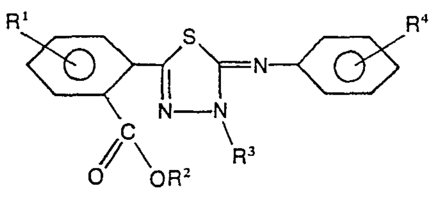

in which $R^1$ is H, or one to four substituents selected from C1, nitro, lower alkyl and lower alkoxy,

$R^2$ is H, lower alkyl, lower alkoxyalkyl, lower alkenyl, lower haloalkyl or agriculturally acceptable cation,

$R^3$ is H, lower alkyl, lower alkenyl, lower alkynyl, lower haloalkyl or benzyl and

$R^4$ is H or at least one substituent selected from 3,4-trimethylene, F, Cl, Br, $CF_3$, nitro, lower dialkylamino, lower alkylcarbonyl, lower alkyl and lower alkoxy with the further provision that at least one ortho position is unsubstituted.

EP 0 023 766 A1

TITLE MODIFIED
see front page

0023766



Regulating growth of plants with phenyliminothiadiazolines

## Description of the Invention

Many chemical substances have been found to have growth regulating effects on plants. Change of shape of plants, crinkling and folding of leaves, stunting of growth, defoliation, stimulation of root growth on cuttings and other effects are frequently observed. It is usually necessary to apply growth regulating substances to plants at comparatively low rates in order to have the growth regulating effects clearly evident. At higher rates a selective kill of vegetation is usually obtained, as some species of plants are affected more than others. Growth regulants have, in fact been used more as selective herbicides than for other purposes because in many instances the growth regulating effects exhibited by these substances have no other practical utility. However, a class of growth regulant compounds has now been discovered that produces a number of useful effects, differing from one plant species to another. For example, some of these compounds promote tillering (branching at the base of the plant) in oats and certain other grasses and increase of fruit set, accompanied by the ability to kill crabgrass by pre-emergent application.

Briefly, the class of growth regulant compounds

has the general structural formula

(I)

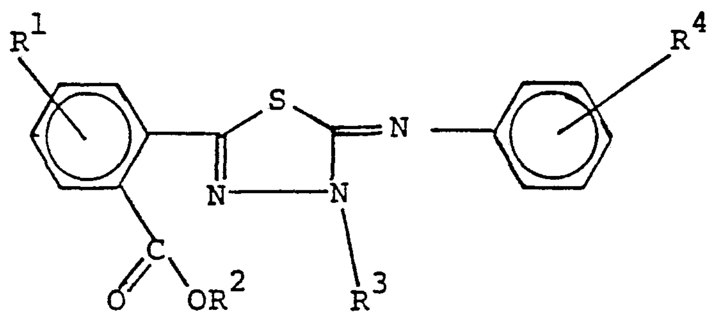

in which $R^1$ is H, or one to four substituents selected from

Cl, nitro, lower alkyl and lower alkoxy,

$R^2$ is H, lower alkyl, lower alkoxyalkyl, lower alkenyl, lower haloalkyl or agriculturally acceptable cation,

$R^3$ is H, lower alkyl, lower alkenyl, lower alkynyl, lower haloalkyl or benzyl and

$R^4$ is H or at least one substituent selected from 3,4-trimethylene F, Cl, Br, $CF_3$, nitro, lower dialkylamino, lower alkylcarbonyl, lower alkyl and lower alkoxy with the further provision that at least one ortho position is unsubstituted.

The terms "lower alkyl", lower alkoxy" etc. as used above are intended to mean $C_1$ to $C_5$ alkyl, etc.

The method of regulating growth of plants, including combating unwanted vegetation, comprises applying to

the plants, either on seed, the soil or directly on the plants an effective amount of a member of the aforementioned class of compounds.

Synthesis of the Growth Regulants

The novel compounds of this invention may be produced by means of procedures based on the following illustrative syntheses. All temperatures are in degrees C.

The thiadiazoline compounds of this invention are conveniently made by ring closure of a class of thiosemicarbazides, which may be prepared by means of a method which is illustrated in the following specific procedures.

(1) Synthesis of methyl hydrogen phthalate.

Methanol (300 ml) was added in a single portion to 148 g (1.00 mole) of phthalic anhydride and the resulting suspension was stirred and heated at reflux for 36 hours; solution occurred during heating. The solvent was removed and the product was recrystallized from a mixture of ethyl acetate and hexane to afford 114.6 g of the title compound (Lit.: Beilstein, 9 797-mp 82.5°, 84°).

(2) Synthesis of methyl phthaloyl chloride.

Methyl hydrogen phthalate (110.0 g., 0.611 mole) and thionyl chloride (77.4 g., 0.650 mole) were mixed in 200 ml of chloroform, keeping the temperature below 30°.

After stirring for two hours at room temperature, the system was heated at reflux for five hours. The solvent was evaporated at reduced pressure and the crude product (120.9 g) was used without further purification (Lit.: Beilstein, 9, 797-no constants).

(3) Synthesis of 1-(2-carbomethoxybenzoyl)-2-methyl-4-phenyl-3-thiosemicarbazide.

A solution of 45.3 g (0.25 mole) of 2-methyl-4-phenyl-3-thiosemicarbazide and 19.8 g (0.25 mole) of pyridine in 800 ml of 1,2-dimethoxyethane was stirred at room temperature while 49.8 g (0.25 mole) of methyl phthaloyl chloride in 100 ml of 1,2-dimethoxyethane was added dropwise over a period of two hours. The resulting reaction mixture was stirred for 16 hours at room temperature. At the end of this time the contents of the flask were poured into ice water. The solid which formed was collected and amounted to 73.3 g (85%); the melting point was 153.5-154°.

The general method of manufacturing the phenyliminothiadiazolines of this invention is the acid-promoted cyclodehydration of a compound of the formula:

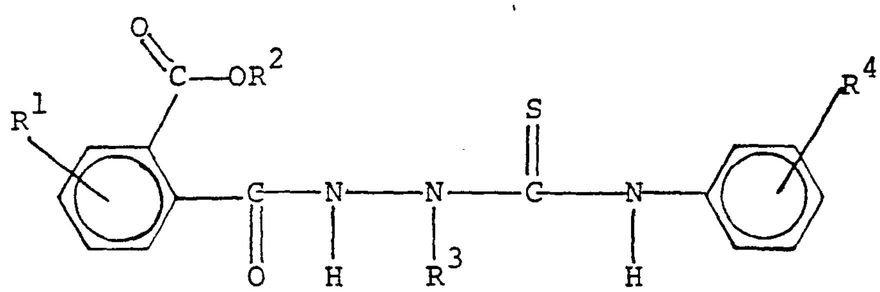

Among the acidic reagents found to be effective are concentrated sulfuric acid, trifluoroacetic anhydride and thionyl chloride and the results obtained seem to depend markedly on the nature of the substituents $R^2$, $R^3$ and $R^4$.

The best general method of cyclization found thus far involves concentrated sulfuric acid and utilizes chloroform as diluent, as illustrated by the following preparation of 5-(2'-carboxyphenyl)-2-(3'-fluorophenyl-imino)-3-methyl-1,3,4-thiadiazol-4-ine.

In a 3 l., 3 neck round bottom flask fitted with a mechanical stirrer, thermometer, reflux condenser and addition funnel, and immersed in an ice bath, a solution of 84.3 g. (0.243 mols) of 1-(2'-carboxybenzoyl)-4-(3'-fluorophenyl)-2-methyl-3-thiosemicarbazide (m.p. 155-7°C) in 1750 ml. of chloroform is stirred while 404 g. of concentrated sulfuric acid is added slowly during a 30 minute period, keeping the temperature below 25°C. A clear solution, two phase system resulted after about half of the sulfuric acid had been added. The mixture was

stirred an additional 2 hours at room temperature and carefully poured into a mixture of 800 ml. of concentrated ammonium hydroxide and 2 kg. of ice. The resulting two-phase system was stirred 15 minutes, and separated. The organic phase was discarded and the aqueous phase was stirred and cooled to 20°C., and acidified to pH3 with 370 ml. of glacial acetic acid, which produced a solid precipitate. The slurry was stirred for 30 minutes at 10°C. and filtered. The filter cake was rinsed with two 300 ml. portions of cold water, reslurried with 750 ml. of cold water, collected by filtration and air dried to give 65 g. (81% yield) of product melting at 207-8°C.

Below are two specific procedures which are illustrative of a small-scale laboratory method:

Preparation of 2-phenylimino-3-methyl-5-(2'-carboxyphenyl)-1,3,4-thiadiazol-4-ine.

To 25 ml. of $H_2SO_4$ was added 5 g. (0.015 mole) of 1-(2'-carboxybenzoyl)-2-methyl-4-phenyl-3-thiosemicarbazide. After stirring at room temperature for 30 minutes, crushed ice was added. The resulting acidic solution was washed with ethyl acetate, then taken to pH 8 with concentrated $NH_4OH$. The precipitated product was collected, washed with cold water and dried to give 1.0g, MP 223-225°.

Preparation of 2-phenylimino-3-methyl-5-(2'-carbomethoxyphenyl-1,3,4-thiadiazol-4-ine.

Using the same conditions described above, 5.0g of 1-(2'-carbomethoxybenzoyl)-2-methyl-4-phenyl-3-thiosemicarbazide gave 1.3g of the desired product, MP 96-98°.

Compounds which have been made by means of procedures of the type illustrated above appear in the following table.

TABLE I

COMPOUNDS OF THE FORMULA

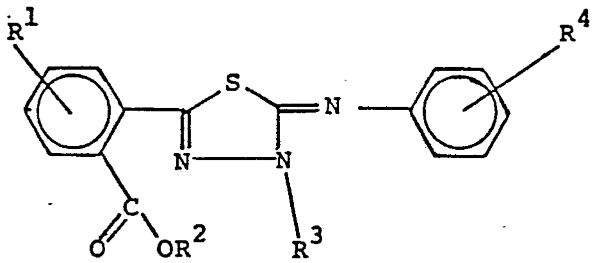

| Compound No. | $R^1$ | $R^2$ | $R^3$ | $R^4$ | M.P.°C. | Comments on Utility |
|---|---|---|---|---|---|---|
| 2812 | H | H | $CH_3$ | H | 223-225 | Promotes tillering of oats |
| 3107 | H | H | $CH_3$ | 3-F | 208-209 | Promotes tillering of oats |
| 3291 | H | $CH_3$ | $CH_3$ | H | 96-98 | Increases fruit set |
| 3356 | H | H | $CH_3$ | 4-F | 195-200 | |
| 3357 | H | $CH_3$ | $CH_3$ | 4-F | 60-61 | Promotes tillering of oats |
| 3373 | H | $CH_3$ | $CH_3$ | $4-OCH_3$ | Oil | |
| 3498 | $Cl_4$ | $CH_3$ | $CH_3$ | H | 142-146 | |
| 3499 | $Cl_4$ | Allyl | $CH_3$ | H | 90-93 | |
| 3801 | H | H | $CH_3$ | $2-CH_3$ | 141-143 | Increases fruit set |
| 3802 | H | H | " | 2-F | 201-202 | Promotes tillering of oats |
| 3803 | H | $CH_3$ | " | 2-F | 119-121 | Increases fruit set and oat tillering |
| 3804 | H | $CH_3$ | " | $4-CH_3$ | 87-88 | Increased fruit set |
| 3840 | H | $CH_3$ | " | $4-NO_2$ | 101-102 | " " " |
| 3841 | H | $CH_3$ | " | 3-Cl | Oil | " " " |
| 3842 | H | $CH_3$ | " | $4-CH_3$ | 73-75 | " " " |

| Compound No. | $R^1$ | $R^2$ | $R^3$ | $R^4$ | M.P.°C. | Comments on Utility |
|---|---|---|---|---|---|---|
| 3902 | H | H | $CH_3$ | 3-$NO_2$ | 178-180 | Increased oat tillers |
| 3903 | H | H | " | 3-$CH_3$-4-Cl | 157-158 | Increased fruit set |
| 3904 | H | H | " | 2-$CH_3$-3-Cl | 147-148 | Increased oat tillers |
| 3905 | H | H | -$CH_3$ | 2-Cl | 194-195 | " " |
| 3906 | 3-$NO_2$ | H | " | H | 194-195 | |
| 3908 | H | H | " | 2-$CH_3$-6-Cl | 183-185 | |
| 3961 | H | H | " | 2,5-dimethyl | 164-165 | Increased fruit set |
| 3965 | H | $C_2H_5$ | " | H | 83-85 | " " " |
| 4016 | H | H | " | 4-$COCH_3$ | 197-198 | Increased oat tillers |
| 4058 | H | allyl | " | H | Oil | Increased fruit set and tillers |
| 4059 | H | H | " | 4-$N(C_2H_5)_2$ | 175-177 | Increased tillers |
| 4104 | H | H | " | 2,4-dichloro | 168-170 | " " |
| 4114 | H | H | " | 3-$CH_3$ | 160-162 | Increased fruit set and tillers |
| 4171 | H | H | " | 3-Br | 164-165 | Increased tillers |
| 4175 | H | H | " | 4-$CF_3$ | 211-213 | " " |
| 4177 | H | $CH_3$ | " | 4-$(CH_2)_3CH_3$ | Oil | Increased fruit set and tillers |
| 4266 | H | $CH_3$ | " | 3-$CH_3$ | Semisolid | Increased fruit set and oat tillers |
| 4271 | H | H | " | 3,4-tri-methylene | 180-182 | Increased fruit set |

0023766

Use of the Growth Regulators

In highly active compounds, phytotoxic and growth-altering effects of pre-emergent and post-emergent application are often readily apparent. These effects may be demonstrated by means of the following illustrative procedures.

Pre-emergent Application

Disposable paper trays about 2 1/2 inches deep were filled with soil and sprayed with aqueous spray mixtures at a rate of 5 lb. of active chemical per acre of sprayed area, were seeded with 6 species of plant seeds and were then covered with about 1/4 inch of soil. The spray mixtures were prepared by dissolving the proper amount of growth regulant compound in 15 ml. of acetone, adding 4 ml. of a solvent-emulsifier consisting of 60 wt. percent of a commercial polyoxyethylated vegetable oil emulsifier (96 wt. percent active ingredient, Emulphor EL-719), 20 wt. percent xylene and 20 wt. percent deodorized kerosene, then bringing total volume up to 60 ml. by addition of warm water. Twenty-one days after seeding and treatment the plantings were examined and plant injury was rated according to the following schedule.

DEGREE OF EFFECT

0 = no effect
1 = slight effect, plants recovered
2 = moderate effect, injury to 26 to 75 percent
3 = severe effect, injury to 76 to 99 percent of foliage
4 = maximum effect (all plants died)

Post-emergent Application

Several species of plants were grown in potting soil in disposable styrofoam trays and tomatoes were grown in four-inch pots in the greenhouse. Aqueous spray formulations were prepared and the growing plants were sprayed at a spray volume of 60 gallons per acre and an application rate of 5 lb. per acre. Spray mixtures were prepared in the manner described above. For comparative purposes, plants were also sprayed at 60 gal./acre with a spray mixture containing no growth regulant. Plant injury was again rated according to the schedule disclosed above.

Observations of growth regulant effects in both pre- and post-emergent tests were observed and recorded as follows:

| Effect | Abbreviation in Tables |
|---|---|
| Formative effect on new growth | F |
| Epinasty | E |
| Growth reduction | G |
| Necrosis | N |
| Non-emergence | K |
| Chlorosis | C |

In the table below there are tabulated the observations of pre- and post-emergent herbicidal and

growth regulator effects resulting from use of the growth regulators of this invention according to the procedures set forth above.

TABLE 2

EFFECTS OF THE COMPOUNDS ON PLANT SPECIES

| Compound No. | Pre-emergent Effects | | | | | | Post-emergent Effects | | | | | |
|---|---|---|---|---|---|---|---|---|---|---|---|---|
| | *Digitaria sanguinalis* | *Celosia plumosa* | *Bromus inermis* | *Setaria italica* | *Raphanus sativus* | *Beta vulgaris* | *Setaria italica* | *Medicago sativa* | *Avena sativa* | *Raphanus sativus* | *Beta vulgaris* | *Lycopersicum esculentum* |
| 2812 | K4 | K3G3 | F3G3 | F3G3 | G3F1 | K4 | F2G1 | F3G2 | F2 | F2 | F3G1 | F3G2 |
| 3107 | K4 | F2G2 | F3G3 | F3G3 | F3G3 | F3G3 | N2G2 | N1G1 | N1G1 | N1G2 | N3G3 | F2G3 |
| 3291 | F3G3 | F2G2 | F3G3 | F3G3 | F1 | F1G1 | F1G1 | F3G2 | F1 | N1F1 | F3G3 | F2 |
| 3356 | - | - | - | - | - | - | - | - | - | - | - | - |
| 3357 | K4 | K4 | F3G3 | F3G2 | F3G2 | F3G2 | F2G1 | F2G3 | F1 | F2G2 | F3G2 | F4 |
| 3373 | F1 | 0 | F2G1 | F2G1 | 0 | F1 | F1G1 | F2G1 | F1 | N1F2 | F2G3 | F2G1 |
| 3498 | 0 | 0 | 0 | 0 | 0 | 0 | 0 | F1 | G1 | 0 | F2G1 | F1 |
| 3499 | K2G1 | F1 | F2 | F1 | 0 | F1 | 0 | N1 | 0 | 0 | F2 | F1 |
| 3801 | K4 | K4 | F3G3 | F3G3 | F3G3 | F3G2 | F2G3 | F2G2 | N1G2 | F2 N1G2 | - | F2 |
| 3802 | F2G2 | K4 | F3G3 | F3G3 | F3G3 | F3G3 | F1 N1G2 | F2 N1G2 | G1F1 | F2G2 | - | N1F1 |
| 3803 | F1 | F1G1 | F3G3 | F2G2 | F2G1 | F2G2 | 0 | F1 | F2 | F2G1 | F3G1 | N2F1 |
| 3804 | F1 | F1G1 | K4 | F3G2 | F2G1 | F2G1 | G2 | N4 | F1 | G1 | F2 N1G2 | F3 |
| 3840 | 0 | 0 | F1 | 0 | 0 | 0 | 0 | 0 | 0 | 0 | F2G1 | F1 |
| 3841 | F2G2 | F2G1 | F3G2 | F3G2 | F3G2 | F2G1 | C1G2 | F3G2 | F2G1 | F1 C2G2 | F2G2 | F3N1 |
| 3842 | F3G2 | F2G1 | K4 | F3G2 | F3G2 | F2G2 | F1 | F3G1 | F1G1 | F1G1 | F2G1 | F2 |
| 3902 | F1G1 | F2G2 | K4 | F3G2 | F3G3 | F3G2 | F1 | F3G3 | F2G1 | F2G2 | F3G3 | F2G2 |
| 3903 | 0 | F1 | F1 | 0 | 0 | F2 | 0 | F2G1 | 0 | F1 | F3G1 | F2 |
| 3904 | F1 | F2 | F3G3 | F3G2 | F3G2 | F2G2 | F1 | F3G3 | F1 | F2G2 | F3G3 | F3G1 |
| 3905 | F1 | F2 | F3G2 | F1G1 | F2G2 | F2G2 | F1 | F3G2 | F1G1 | F1G1 | F3G3 | F2G1 |

TABLE 2

EFFECTS OF THE COMPOUNDS ON PLANT SPECIES

| Compound No. | Pre-emergent Effects | | | | | | Post-emergent Effects | | | | | |
|---|---|---|---|---|---|---|---|---|---|---|---|---|
| | *Digitaria sanguinalis* | *Celosia plumosa* | *Bromus inermis* | *Setaria italica* | *Raphanus sativus* | *Beta vulgaris* | *Setaria italica* | *Medicago sativa* | *Avena sativa* | *Raphanus sativus* | *Beta vulgaris* | *Lycopersicum esculentum* |
| 3906 | 0 | 0 | F2 | 0 | 0 | F1 | 0 | F1 | 0 | 0 | F2G1 | F1 |
| 3907 | F1 | F2G1 | F3G3 | F2G2 | F3G2 | F2G2 | F2G2 | F1 | F1G1 | F3G2 | N4 | F2 |
| 3908 | 0 | 0 | K2 | 0 | G1 | 0 | 0 | 0 | 0 | 0 | N2 | 0 |
| 3961 | F2G2 | F3G2 | K4 | F3G3 | F3G3 | F3G2 | F2G2 | F3G3 | F1G1 | F2 | N4 | F3G1 |
| 3965 | F2G2 | F2G2 | F3G3 | F3G2 | F2G1 | F2G1 | G1 F1C1 | F3G2 | F1 | F2C1 | F3G3 | F3 |
| 4016 | F2G2 | F1G1 | F3G2 | F3G3 | F2G2 | F1G1 | G2F2 | F3G2 | F2G2 | F2G1 | F1G1 | F3 |
| 4058 | F3G3 | F2G2 | F3G3 | F3G3 | F3G2 | F3G2 | F2G1 | F3G2 | F2G2 | F2G1 | F3G2 | F2 |
| 4059 | 0 | F1 | F2 | 0 | 0 | F1 | F2G1 | F3G1 | F1G1 | F1G1 | F2G1 | F2 |
| 4104 | F1G1 | G2F1 | F3G1 | F2G1 | F3G1 | F3G1 | G2 | F1G1 | F1 | N4 | N4 | F2 |
| 4114 | F3G3 | F3G2 | F3G3 | F3G3 | F3G3 | K4 | N2G1 | F3G3 | F2G2 | N4 | N4 | F3G2 |
| 4171 | F1 | F3G3 | F3G2 | F2G1 | F2G2 | F2G1 | F2G2 | F3G1 | F2 | F2G1 | F3G3 | F3 |
| 4175 | F3G3 | F3G3 | F3G3 | F3G3 | F3G3 | F3G2 | F2G2 | F3G2 | F2 | F2G2 | F3G2 | F3G1 |
| 4177 | F2G2 | F2G2 | F3G3 | F2G1 | F1G1 | F1G1 | F1 | F2 | F2 | F2 | F2 | F2 |
| 4266 | F3G3 | F2G2 | F3G3 | F3G3 | F2G2 | F3G2 | F2G2 | F3G3 | F2G2 | F2G1 | F3G3 | F3G1 |
| 4271 | F3G3 | F3G3 | F3G3 | F3G2 | F3G2 | F3G2 | F1G1 | F3G2 | F2G1 | F1G1 | F3G2 | F3 |

The use of many of the growth regulator compounds may be demonstrated by treatment of soybeans (*soja max*) to increase the number of seed pods and by treating tomato plants (*Lycopersicum esculentum*) to increase fruit set. In an illustrative experiment, *Soja max* (Evans variety) and *Lycopersicum esculentum* (Tiny Tim variety) were grown in 4-inch pots (one plant per pot) filled with greenhouse potting soil (2 parts good top soil, 1 1/2 parts builders sand, 1 1/2 parts peat, fertilized with 5 lb. of 12-12-6 fertilizer and 5 lb. of finely ground limestone per cu. yd.). Aqueous spray formulations were prepared and the potted plants were sprayed at a spray volume of 40 gal. per acre and at application rates of 16, 4, 1 and 1/4 oz. per acre. The spray mixtures were prepared by dissolving the proper amount of growth regulator compound in 15 ml. of acetone, adding 2 ml. of a solvent-emulsifier mixture consisting of 60 wt. percent of a commercial polyoxyethylated vegetable oil emulsifier (96 wt. percent active ingredient, Emulphor El-719), 20 wt. percent xylene and 20 wt. percent deodorized kerosene, then bringing total volume up to 80 ml. by addition of a 0.156 wt. percent aqueous solution of liquid non-ionic dispersant (90 wt. percent active trimethylnonyl polyethylene glycol ether, Tergitol TMN-10). Two replicates were sprayed at all application rates. For comparative purposes, plants were also sprayed at 40

gal./acre with water. The number of seed pods and of fruit as percentage of arithmetic mean of the numbers on untreated plants was observed within approximately three weeks after spray treatment and the results are tabulated below. The extent of growth regulatory effect on the plants was estimated on a scale of 0 to 10 and is also recorded in the following table:

Table 3.

GROWTH REGULATING EFFECTS ON TWO SPECIES

| Compound No. | Rate (oz/A) | *Soja max* Pod Count (1) Percent in Comparison to Untreated Plants | *Soja max* Growth Regulating Effect (2) | *Lycopersicum esculentum* Fruit Count (1) Percent in Comparison to Untreated Plants | *Lycopersicum esculentum* Growth Regulating Effect |
|---|---|---|---|---|---|
| 2812 | 16 | 174 (a) | 5.5 | 400 (b) | 7.5 |
| | 4 | 143 | 2.0 | 255 | 4.5 |
| | 1 | 109 | 0 | 182 | 1 |
| 3107 | 16 | 138 (a) | 6.5 | 136 (c) | 6 |
| | 4 | 112 | 2.0 | 245 | 4 |
| | 1 | 93 | 1 | 218 | 1 |
| 3291 | 16 | 143 | 3.5 | 136 (c) | 5.5 |
| | 4 | 115 | 1.0 | 27 | 1.5 |
| | 1 | 110 | 0 | 109 | 0 |
| 3801 | 16 | 140 | 7.5 | 700 | 4.5 |
| | 4 | 129 | 5 | 900 | 2 |
| | 1 | 136 | 4 | 200 | 0 |
| 3802 | 16 | 105 | 7 | 1100 | 7 |
| | 4 | 136 | 1.5 | 800 | 4.5 |
| | 1 | 122 | 1 | 800 | 3.5 |
| 3803 | 16 | 119 | 5 | 800 | 3.5 |
| | 4 | 87 | 2 | 700 | 3 |
| | 1 | 94 | 0.5 | 400 | 0.5 |
| 3804 | 16 | 143 | 8 | 900 | 6.5 |
| | 4 | 115 | 5.5 | 700 | 3 |
| | 1 | 87 | 3.5 | 800 | 1 |
| 3840 | 16 | 84 | 1.5 | 200 | 0 |
| | 4 | 101 | 0.5 | 200 | 0 |
| | 1 | 105 | 0 | 100 | 0 |
| 3841 | 16 | 119 | 7.5 | 700 | 5 |
| | 4 | 108 | 5.5 | 800 | 4 |
| | 1 | 105 | 1.5 | 500 | 1 |
| 3842 | 16 | 133 | 7.5 | 700 | 6 |
| | 4 | 108 | 3.5 | 800 | 2 |
| | 1 | 119 | 0.5 | 800 | 1.5 |

GROWTH REGULATING EFFECTS ON TWO SPECIES

| Compound No. | Rate (oz/A) | *Soja max* Pod Count[1] Percent in Comparison to Untreated Plants | Growth Regulating Effect[2] | *Lycopersicum esculentum* Fruit Count[1] Percent in Comparison to Untreated Plants | Growth Regulating Effect |
|---|---|---|---|---|---|
| 4104 | 16 | 138 | 1.5 | 214 | 3.5 |
| | 4 | 121 | 0 | 182 | 2 |
| | 1 | 125 | 0 | 118 | 1 |
| 4266 | 16 | 114 | 5.5 | 175 | 4.5 |
| | 4 | 114 | 3 | 225 | 2 |
| | 1 | 97 | 1.5 | 113 | 1 |

[1] Check = 100

[2] Greenhouse rating on scale of 0, no effect; 10, total kill.

[a] Smaller pods

[b] Malformed fruit

[c] Stimulated growth

The information presented in tabular form herein will enable a worker in the art to make a selection from among the growth regulator compounds of the invention and to make some judgment with regard to application rates, depending upon the effect which is desired. It may be seen, for example, that total kills of some species of vegetation frequently occurs at application rates as high as 5 to 10 lb. per acre, whereas beneficial effects may be observed on living plants at application rates of 1 lb. per acre or less.

The growth regulator compounds are usually applied in combination with inert carriers or diluents, as in aqueous sprays, granules and dust formulations, in accordance with established practice in the art. An aqueous spray in usually prepared by mixing a wettable powder or emulsifiable concentrate formulation of a growth regulator with a relatively large amount of water to form a dispersion.

Wettable powders comprise intimate, finely divided mixtures of growth regulator compounds, inert solid carriers and surface active agents. The inert solid carrier is usually chosen from among the attapulgite clays, the kaolin clays, the montmorillonite clays, the diatomaceous earths, finely divided silica and purified silicates. Effective surfactants, which have wetting, penetrating and dispersing ability are usually present in a wettable

powder formulation in proportions of from 0.5 to about 10 percent by weight. Among the surface active agents commonly used for this purpose are the sulfonated lignins, naphthalenesulfonates and condensed naphthalenesulfonates, alkylbenzenesulfonates, alkyl sulfates and non-ionic surfactants such as products of condensation of ethylene oxide with alkylphenols.

Emulsifiable concentrates of the growth regulator compounds comprise in each instance, a solution of growth regulator compound in a liquid carrier which is a mixture of water-immiscible solvent and surfactants, including emulsifiers. Useful solvents include aromatic hydrocarbon solvents such as the xylenes, alkylnaphthalenes, petroleum distillates, terpene solvents, ether-alcohols and organic ester solvents. Suitable emulsifiers, dispersing and wetting agents may be selected from the same classes of products which are employed in formulating wettable powders.

In general, the growth regulator formulations desirably contain from 0.1 percent to 95 percent by weight of a compound of formula (I) and from 0.1 to 75 percent of a carrier or surfactant. However, direct application to plant seeds prior to planting may be accomplished in some instances by mixing powdered solid growth regulator with seed to obtain a substantially uniform coating which is very thin and comprises only one or two percent by weight

or less, based on the weight of the seed. In most instances, however, a nonphytotoxic solvent, such as methanol is employed as a carrier to facilitate the uniform distribution of growth regulator on the surface of the seed.

When a compound is to be applied to the soil, as for a pre-emergence application, granular formulations are sometimes more convenient than sprays. A typical granular formation comprises the growth regulator compound dispersed on an inert carrier such as coarsely ground clay, or clay which has been converted to granules by treatment of a rolling bed of the powdered material with a small amount of liquid in a granulating drum. In the usual process for preparing granular formulations, a solution of the active compound spray is sprayed on the granules while they are being agitated in a suitable mixing apparatus, after which the granules are dried with a current of air during continued agitation.

Claims:

1. The method of regulating growth of plants, including combating unwanted vegetation, comprising applying to the plants, either on seed, the soil or directly on the plants an effective amount of a compound having the general structural formula

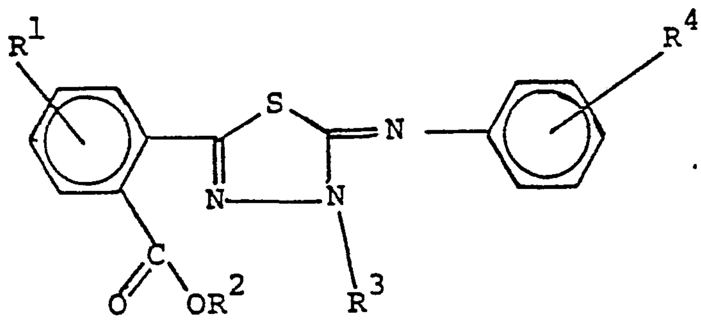

in which $R^1$ is H, or one to four substituents selected from

Cl, lower alkyl and lower alkoxy,

$R^2$ is H, lower alkyl, lower alkoxyalkyl, lower alkenyl, lower haloalkyl or agriculturally acceptable cation,

$R^3$ is H, lower alkyl, lower alkenyl, lower alkynyl, lower haloalkyl or benzyl and

$R^4$ is H or at least one substituent selected from F, Cl, Br, $CF_3$, lower alkyl and lower alkoxy with the further provision that at least one ortho position is unsubstituted.

2. The method according to claim 1 in which $R^1$,

$R^2$ and $R^4$ are hydrogen and $R^3$ is methyl.

3. The method according to claim 1 in which $R^1$ and $R^2$ are hydrogen, $R^3$ is methyl and $R^4$ is 3-fluoro.

4. The method according to claim 1 in which $R^1$ and $R^4$ are hydrogen and $R^2$ and $R^3$ are methyl.

5. The method according to claim 1 in which $R^1$ and $R^2$ are hydrogen, $R^3$ is methyl and $R^4$ is 4-fluoro.

6. The method according to claim 1 in which $R^1$ is hydrogen, $R^2$ and $R^3$ are methyl and $R^4$ is 4-fluoro.

7. The method according to claim 1 in which $R^1$ is hydrogen, $R^2$ and $R^3$ are methyl and $R^4$ is 4-methoxy.

8. The method according to claim 1 in which $R^1$ is 3, 4, 5, 6-tetrachloro, $R^2$ and $R^3$ are methyl and $R^4$ is hydrogen.

9. The method according to claim 1 in which $R^1$ is 3, 4, 5, 6-tetrachloro, $R^2$ is allyl, $R^3$ is methyl and $R^4$ is hydrogen.

10. The method according to claim 1 in which $R^1$ and $R^2$ are hydrogen, $R^3$ is methyl and $R^4$ is 2-methyl.

11. The method according to claim 1 in which $R^1$ and $R^2$ are hydrogen, $R^3$ is methyl and $R^4$ is 2-fluoro.

12. The method according to claim 1 in which $R^1$ is hydrogen, $R^2$ and $R^3$ are methyl and $R^4$ is 2-fluoro.

13. The method according to claim 1 in which $R^1$ is hydrogen, $R^2$ and $R^3$ are methyl and $R^4$ is trifluoromethyl.

14. The method according to claim 1 in which $R^1$ is hydrogen, $R^2$ and $R^3$ are methyl and $R^4$ is 4-nitro.

15. The method according to claim 1 in which $R^1$ is hydrogen, $R^2$ and $R^3$ are methyl and $R^4$ is 3-chloro.

16. The method according to claim 1 in which $R^1$ is hydrogen, $R^2$ and $R^3$ are methyl and $R^4$ is 4-methyl.

17. The method according to claim 1 in which $R^1$ and $R^2$ are hydrogen, $R^3$ is methyl and $R^4$ is 3-nitro.

18. The method according to claim 1 in which $R^1$ and $R^2$ are hydrogen, $R^3$ is methyl and $R^4$ is 4-chloro-3-trifluoromethyl.

19. The method according to claim 1 in which $R^1$ and $R^2$ are hydrogen, $R^3$ is methyl and $R^4$ is 3-chloro-2-methyl.

20. The method according to claim 1 in which $R^1$ and $R^2$ are hydrogen, $R^3$ is methyl and $R^4$ is 2-chloro.

21. The method according to claim 1 in which $R^1$ is 3-nitro, $R^2$ is hydrogen, $R^3$ is methyl and $R^4$ is hydrogen.

22. The method according to claim 1 in which $R^1$ and $R^2$ are hydrogen, $R^3$ is methyl and $R^4$ is 2,5-dimethyl.

23. The method according to claim 1 in which $R^1$ is hydrogen, $R^2$ is ethyl, $R^3$ is methyl and $R^4$ is hydrogen.

24. The method according to claim 1 in which $R^1$ and $R^2$ are hydrogen, $R^3$ is methyl and $R^4$ is acetyl.

25. The method according to claim 1 in which $R^1$ is hydrogen, $R^2$ is allyl, $R^3$ is methyl and $R^4$ is hydrogen.

26. The method according to claim 1 in which $R^1$ and $R^2$ are hydrogen, $R^3$ is methyl and $R^4$ is 4-dimethylamino.

27. The method according to claim 1 in which $R^1$ and $R^2$ are hydrogen, $R^3$ is methyl and $R^4$ is 2,4-dichloro.

28. The method according to claim 1 in which $R^1$ and $R^2$ are hydrogen, $R^3$ is methyl and $R^4$ is 3-methyl.

29. The method according to claim 1 in which $R^1$ and $R^2$ are hydrogen, $R^3$ is methyl and $R^4$ is 3-bromo.

30. The method according to claim 1 in which $R^1$ and $R^2$ are hydrogen, $R^3$ is methyl, and $R^4$ is 4-trifluoromethyl.

31. The method according to claim 1 in which $R^1$ is hydrogen, $R^2$ and $R^3$ are methyl and $R^4$ is 4-butyl.

32. The method according to claim 1 in which $R^1$ is hydrogen, $R^2$ and $R^3$ are methyl and $R^4$ is 3-methyl.

33. The method according to claim 1 in which $R^1$ and $R^2$ are hydrogen, $R^3$ is methyl and $R^4$ is 3,4-trimethylene.

34. The compound having the general structural formula

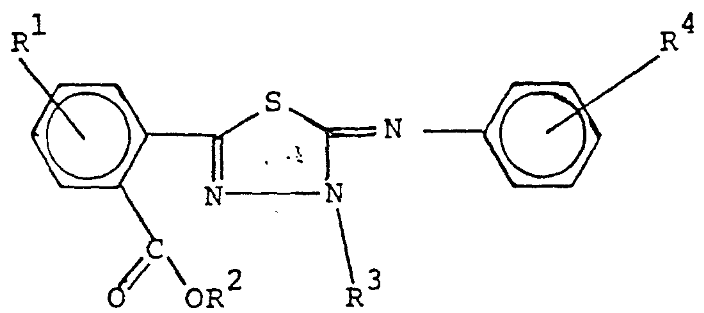

in which $R^1$ is H, or one to four substituents selected from

Cl, lower alkyl and lower alkoxy,

$R^2$ is H, lower alkyl, lower alkoxyalkyl, lower alkenyl, lower haloalkyl or agriculturally acceptable cation,

$R^3$ is H, lower alkyl, lower alkenyl, lower alkynyl, lower haloalkyl or benzyl and

$R^4$ is H or at least one substituent selected from F, Cl, Br, $CF_3$, lower alkyl and lower alkoxy with the further provision that at least one ortho position is unsubstituted.

35. The compound according to claim 34 in which $R^1$, $R^2$ and $R^4$ are hydrogen and $R^3$ is methyl.

36. The compound according to claim 34 in which $R^1$ and $R^2$ are hydrogen, $R^3$ is methyl and $R^4$ is 3-fluoro.

37. The compound according to claim 34 in which $R^1$ and $R^4$ are hydrogen and $R^2$ and $R^3$ are methyl.

38. The compound according to claim 34 in which $R^1$ and $R^2$ are hydrogen, $R^3$ is methyl and $R^4$ is 4-fluoro.

39. The compound according to claim 34 in which $R^1$ is hydrogen, $R^2$ and $R^3$ are methyl and $R^4$ is 4-fluoro.

40. The compound according to claim 34 in which $R^1$ is hydrogen, $R^2$ and $R^3$ are methyl and $R^4$ is 4-methoxy.

41. The compound according to claim 34 in which $R^1$ is 3, 4, 5, 6-tetrachloro, $R^2$ and $R^3$ are methyl and $R^4$

is hydrogen.

42. The compound according to claim 34 in which $R^1$ is 3, 4, 5, 6-tetrachloro, $R^2$ is allyl, $R^3$ is methyl and $R^4$ is hydrogen.

43. The compound according to claim 34 in which $R^1$ and $R^2$ are hydrogen, $R^3$ is methyl and $R^4$ is 2-methyl.

44. The compound according to claim 34 in which $R^1$ and $R^2$ are hydrogen, $R^3$ is methyl and $R^4$ is 2-fluoro.

45. The compound according to claim 34 in which $R^1$ is hydrogen, $R^2$ and $R^3$ are methyl and $R^4$ is 2-fluoro.

46. The compound according to claim 34 in which $R^1$ is hydrogen, $R^2$ and $R^3$ are methyl and $R^4$ is trifluoromethyl.

47. The compound according to claim 34 in which $R^1$ is hydrogen, $R^2$ and $R^3$ are methyl and $R^4$ is 4-nitro.

48. The compound according to claim 34 in which $R^1$ is hydrogen, $R^2$ and $R^3$ are methyl and $R^4$ is 3-chloro.

49. The compound according to claim 34 in which $R^1$ is hydrogen, $R^2$ and $R^3$ are methyl and $R^4$ is 4-methyl.

50. The compound according to claim 34 in which $R^1$ and $R^2$ are hydrogen, $R^3$ is methyl and $R^4$ is 3-nitro.

51. The compound according to claim 34 in which $R^1$ and $R^2$ are hydrogen, $R^3$ is methyl and $R^4$ is 4-chloro-3-trifluoromethyl.

52. The compound according to claim 34 in which $R^1$ and $R^2$ are hydrogen, $R^3$ is methyl and $R^4$ is 3-chloro-2-methyl.

53. The compound according to claim 34 in which $R^1$ and $R^2$ are hydrogen, $R^3$ is methyl and $R^4$ is 2-chloro.

54. The compound according to claim 34 in which $R^1$ is 3-nitro, $R^2$ is hydrogen, $R^3$ is methyl and $R^4$ is hydrogen.

55. The compound according to claim 34 in which $R^1$ and $R^2$ are hydrogen, $R^3$ is methyl and $R^4$ is 2,5-dimethyl.

56. The compound according to claim 34 in which $R^1$ is hydrogen, $R^2$ is ethyl, $R^3$ is methyl and $R^4$ is hydrogen.

57. The compound according to claim 34 in which $R^1$ and $R^2$ are hydrogen, $R^3$ is methyl and $R^4$ is acetyl.

58. The compound according to claim 34 in which $R^1$ is hydrogen, $R^2$ is allyl, $R^3$ is methyl and $R^4$ is hydrogen.

59. The compound according to claim 34 in which $R^1$ and $R^2$ are hydrogen, $R^3$ is methyl and $R^4$ is 4-dimethylamino.

60. The compound according to claim 34 in which $R^1$ and $R^2$ are hydrogen, $R^3$ is methyl and $R^4$ is 2,4-dichloro.

61. The compound according to claim 34 in which $R^1$ and $R^2$ are hydrogen, $R^3$ is methyl and $R^4$ is 3-methyl.

62. The compound according to claim 34 in which

$R^1$ and $R^2$ are hydrogen, $R^3$ is methyl and $R^4$ is 3-bromo.

63. The compound according to claim 34 in which $R^1$ and $R^2$ are hydrogen, $R^3$ is methyl, and $R^4$ is 4-trifluoromethyl.

64. The compound according to claim 34 in which $R^1$ is hydrogen, $R^2$ and $R^3$ are methyl and $R^4$ is 4-butyl.

65. The compound according to claim 34 in which $R^1$ is hydrogen, $R^2$ and $R^3$ are methyl and $R^4$ is 3-methyl.

66. The compound according to claim 34 in which $R^1$ and $R^2$ are hydrogen, $R^3$ is methyl and $R^4$ is 3,4-trimethylene.

67. The method of manufacturing a compound having the general structural formula

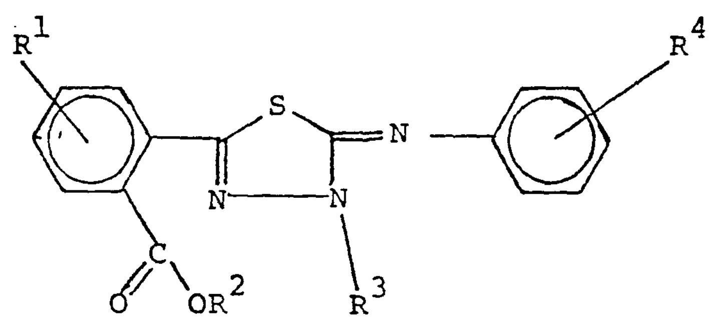

in which $R^1$ is H, or one to four substituents selected from

Cl, lower alkyl and lower alkoxy,

$R^2$ is H, lower alkyl, lower alkoxyalkyl, lower alkenyl, lower haloalkyl or agriculturally acceptable cation,

$R^3$ is H, lower alkyl, lower alkenyl, lower alkynyl, lower haloalkyl or benzyl and

$R^4$ is H or at least one substituent selected from F, Cl, Br, $CF_3$, lower alkyl and lower alkoxy with the further provision that at least one ortho position is unsubstituted, comprising the acid-promoted cyclodehydration of a corresponding compound of the formula:

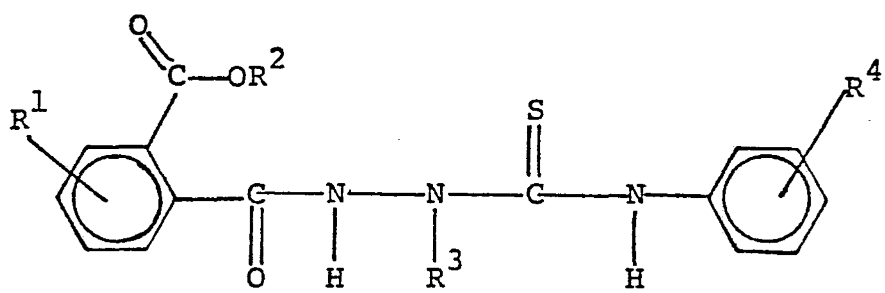

68. The method of claim 67 in which the cyclodehydration is carried out in the presence of an acid promoter selected from sulfuric acid, trifluoroacetic anhydride and thionyl chloride.

69. The method of claim 67 in which the cyclodehydration is carried out in the presence of sulfuric acid as a promoter and chloroform as a nonreactive diluent.

70. The method of any one of claims 67, 68 or 69 in which the cyclodehydration is carried out at room temperature.

71. An agricultural formulation containing as an active ingredient from 0.1 to 95 percent by weight of a compound having the general structural formula

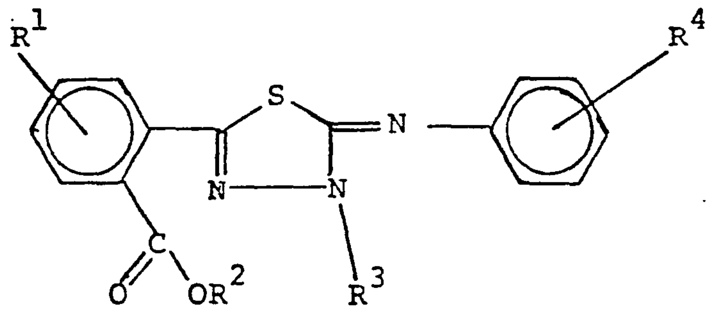

in which $R^1$ is H, or one to four substituents selected from

Cl, lower alkyl and lower alkoxy,

$R^2$ is H, lower alkyl, lower alkoxyalkyl, lower alkenyl, lower haloalkyl or agriculturally acceptable cation,

$R^3$ is H, lower alkyl, lower alkenyl, lower alkynyl, lower haloalkyl or benzyl and

$R^4$ is H or at least one substituent selected from F, Cl, Br, $CF_3$, lower alkyl and lower alkoxy with the further provision that at least one ortho position is unsubstituted.

72. A compound of formula (I) substantially as hereinbefore described with reference to any one of the exemplified preparation procedures and to Table I.

73. A compound of formula (I) whenever prepared

by a method according to claim 67.

74. A method of manufacturing a compound of formula (I) substantially as hereinbefore described with reference to any one of the illustrative synthesis procedures.

75. A method of regulating the growth of plants substantially as hereinbefore described with reference to Tables 2 and 3.

European Patent Office

# EUROPEAN SEARCH REPORT

0023766

Application number
EP 80 30 2204

## DOCUMENTS CONSIDERED TO BE RELEVANT

| Category | Citation of document with indication, where appropriate, of relevant passages | Relevant to claim |
|---|---|---|
| | US - A - 4 020 078 (N.A. DAHLE)<br>* Columns 1,2 *<br>--- | 1,34,67,71,73,74,75 |
| | CH - A - 556 862 (AIR PRODUCT)<br>* Columns 1,2,3 *<br>--- | 34,67,73,74 |
| | GB - A - 1 039 442 (CIBA)<br>* Claims; pages 1,2,3 *<br>--- | 1,34,67,71,73,74,75 |
| | US - A - 3 522 267 (DIETER DUERR et al.)<br>* Columns 1,2,3 *<br>---- | 1,34,67,71,73,74,75 |

CLASSIFICATION OF THE APPLICATION (Int. Cl. 3)

C 07 D 285/12
A 01 N 47/38
// C 07 C 159/00

TECHNICAL FIELDS SEARCHED (Int.Cl. 3)

C 07 D 285/12

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-10-1980 | CREMERS |

EPO Form 1503.1 06.78